**Europäisches Patentamt**

**European Patent Office**

**Office européen des brevets**

(11) Veröffentlichungsnummer : **0 304 419 B1**

(12) **EUROPÄISCHE PATENTSCHRIFT**

(45) Veröffentlichungstag der Patentschrift :
25.03.92 Patentblatt 92/13

(51) Int. Cl.⁵ : **G01C 21/12**

(21) Anmeldenummer : **87902313.3**

(22) Anmeldetag : **13.05.87**

(86) Internationale Anmeldenummer :
**PCT/AT87/00035**

(87) Internationale Veröffentlichungsnummer :
**WO 87/07012 19.11.87 Gazette 87/25**

(54) **AUTOMATISCHES ORIENTIERUNGSGERÄT FÜR WANDERER UND BLINDE.**

(30) Priorität : **14.05.86 AT 1289/86**
**22.04.87 AT 993/86**

(43) Veröffentlichungstag der Anmeldung :
**01.03.89 Patentblatt 89/09**

(45) Bekanntmachung des Hinweises auf die
Patenterteilung :
**25.03.92 Patentblatt 92/13**

(84) Benannte Vertragsstaaten :
**AT BE CH DE FR GB IT LI LU NL SE**

(56) Entgegenhaltungen :
**DE-A- 3 319 208**
**DE-A- 3 333 176**
**US-A- 3 355 942**

(73) Patentinhaber : **REITER, Lothar**
**Joh. Straussgasse 27**
**A-1040 Wien (AT)**

(72) Erfinder : **REITER, Lothar**
**Joh. Straussgasse 27**
**A-1040 Wien (AT)**

(74) Vertreter : **Haffner, Thomas M., Dr. et al**
**Patentanwaltskanzlei Dipl.-Ing. Adolf**
**Kretschmer Dr. Thomas M. Haffner**
**Schottengasse 3a**
**A-1014 Wien (AT)**

## Beschreibung

Bisher war eine Orientierung für den in freier Natur wandernden, laufenden oder reitenden Menschen nur mit verschiedenen Hilfsmittel wie Landkarten und Kompass möglich. Der Umgang mit Kompass und Plan erforderte einigermaßen Kenntnisse ünd Erfahrung und blieb trotzdem ein langsames und umständliches Verfahren, das bei schlechten Sichtverhältnissen überhaupt versagte. Auf jedenfall war man in seiner Wahl der Wander- und Lauf-Routen eingeschränkt auf in der Landkarte eingetragene Wege oder zumindest auf das Finden von markierten Orientierungs-Fixpunkten angewiesen. Mit oder ohne Verwendung von Karten und Kompass forderte eine Orientierung jedenfalls ständige Aufmerksamkeit, gute Augen und gute Sicht.

Sehbehinderte oder Blinde hatten bis heute kaum eine Möglichkeit ohne Begleitperson oder Führungshund, längere Wege durch Stadt und Land alleine wagen zu können.

Funkpeilgeräte haben den Nachteil, daß sie Postgenehmigungspflichtig sind, weil sie andere Geräte stören können. Würde man aber jedes Gerät mit einer anderen Wellenlänge betreiben wollen, dann wäre eine verbreiterte Verwendung ausgeschlossen. Außerdem ist zumindest eine weitere Funkstation, sowie ein guter Empfang nötig.

Selbständige, autarke Navigationseinrichtungen sind in der Flug -, Schiff -, Raketen - und Fahrzeugtechnik bekannt siehe Z.B. DE-A- 3 333 176. 50 ist auch eine Navigationseinrichtung für Straßenfahrzeuge durch DE-A- 29 41 331 bekannt, wobei basierend auf Weg- und Richtungsmessung durch Subtraktion eines Wegvektors und eines durch eine Eingabevorrichtung eingebbaren Zielvektors, ein Differenz-Zielvektor errechnet wird. Bei dieser früheren Erfindung mußte der Benutzer mindestens vor Antritt seiner Fahrt mittels Tastenfeldes oder einer anderen Eingabeeinrichtung Zielvektoren eingeben, indem er aus einer Straßenkarte Koordinaten herausmessen und in das Eingabegerät übertragen mußte.Dieses Verfahren war kompliziert und nicht für jedermann geschaffen. Speziele aus diesem Nachteil heraus entwickelte,computergerechte Pläne für Computereingabe-Methoden wie Lichtgriffel und dgl. hatten die Anlage noch aufwendiger und teurer gemacht. Für gewöhnliche Kraftfahrer sind solche Anlagen nicht nur sehr teuer, sondern stellen auch beachtliche Anforderungen an die Bedienung, insbesondere an die fehlerfreie Übertragung und Eingabe von Koordinaten aus Plänen oder Kartenvorlagen.

Ein elektronisches Orientierungsgerät, welches von einer gehenden Person getragen wird, einen magnetischen Erdfeld-Richtungsgeber zur Gewinnung eines der Bewegungsrichtung entsprechenden elektrischen Richtungssignales und als Wegmesser einen am Körper oder Fuß des Trägers befestigten Beschleunigungssensor als Bewegungswandler zur Gewinnung eines Wegsignals verwendet und eine elektronische Schaltung zur vektoriellen Integration enthält, is durch die **US-3,840,726** bekannt. Dabei wird ein Wegsignal durch eine kontinuierliche und zeitliche Integration eines 3-dimensionalen Beschleunigungssignales gewonnen. Somit muß eine 3-dimensionale Vektorintegration vorgenommen werden. Das System ist kompliziert, es ist zusätzlich eine Gravitations-Messung und die Gewinnung eines Kontrollsignals zur Stillstanderkennung notwendig.

Ein Orientierungsgerät, welches bei jedem Schritt einen Einheits-Vektor aufsummiert und den resultierenden zurückgelegten Kurs durch eine Anzeigeeinrichtungen anzeigt, ist als mechanisches Navigationsgerät in der **US-3,355,942** bekannt geworden. Darin dient zur Erzeugung von mechanischen Schrittzählimpulsen ein in in der Schuhsole eingebauter Blasebalg, welcher bei jedem Auftritt einen Gasdruck-Impuls erzeugt, der über einen Schlauch, welcher an das am Gürtel getragene Gerät angeschlossen ist, zwei Stellrädchen unterschiedlich stark antreibt. Eine rotierende Kompaßrose steuert dabei, in einem Verteiler mit Ventilen, die Verteilung der pneumatischen Impulse auf die beiden Stell- Rädchen. Der zurückgelegte Kurs wird durch eine Anzeigevorrichtung, nämlich ein durch getrennte Nord/Süd- und Ost/West-Zeigerrädchen angezeigt.

Die **US-3,635,399** beschreibt ebenfalls ein mechanisches Gerät, wie in der US-3,355,942 jedoch statt eines Blasebalgs im Schuh als Druckimpuls-Geber wird ein Pendelgewicht im Gerät selbst verwendet, welches bei jedem Schritt ein mechanisches Stellwerk über ein Zahnrad antreibt. Der zurückgelegte Kurs wird ebenfalls durch einen separaten Nord/Süd- und einen Ost/West- Zeiger angezeigt.

Bisher waren besonders die mechanischen aber auch die verbesserten elektronischen, tragbaren Orientierungsgeräte in ihrer Genauigkeit nur bedingt brauchbar, denn die nichtkonstanten Schrittlängen, Störungen und Inhomogenitäten des Erdmagnetfeldes und viele andere Fehlerquellen reduzierten die Zielgenauigkeit und damit die noch sinnvoll nutzbare Tourengröße einer Wanderung beträchtlich. Auch eine gewisse Ausmittelung von bestimmten Fehlern ist nicht zufriedenstellend und unsicher.

Aufgabe der Erfindung ist es, die Genauigkeit des Orientierungssystems zu verbessern.

Erfindungsgemäß wird diese Aufgabe gelöst wie in Patentanspruch 1 angegeben.

Mittels der vorliegenden Erfindung die klein, leicht und billig ist, kann jeder einfache Mensch und vor allem Sehbehinderte und Blinde, ohne technische Geschicklichkeit, ohne irgendwelche Koordinaten aus Plänen oder Landkarten verwenden oder übertragen zu müssen, beim Gehen, Laufen oder Reiten sicher zu seinem Ausgangsort zurückfinden. Da diese erfindungsmäßige Orientierungsgerät keine weiteren Hilfsmittel und keine besondere handhabung benötigt, und selbständig und automatisch funktioniert, stellt dieses erfindungsmäßige Orientierungsgerät für jeden Wanderer besonders in Notsituationen und für Sehbehinderte, einen beachtlichen Wert dar.

Durch diese Erfindung wird außerdem beim Erreichen eines gespeicherten Zwischenortes durch die Speicherrückruf- Einrichtung der bis dahin kumulierte Weisungsfehler automatisch gelöscht und von da ab der unverfälschte, gespeicherte resultierende Wegvektor zurück zum vorangegangenen Ausgangsort, angezeigt. Dieses Orientierungsgerät für Fußgeher kann damit genauer zu einem Ort führen als es die Genauigkeit von Erdmagnetfeld und Schrittlänge theoretisch zuläßt.

In einer vorteilhaften Ausführung wird bei Drehung des Benutzers, in die Richtung des Negativwertes ($\varphi$- 180°) des resultierenden Wegvektors, das ist in die Richtung zum Ausgangsort, dies dem Benutzer durch Modulation eines akustischen oder durch Vibration fühlbaren Leit-Signales in Abhängigkeit von der Größe der Abweichung seiner momentanen Bewegungsrichtung von der Soll- Richtung ($\varphi$- 180°) zum Ausgangsort, angezeigt.

Dadurch kann der Benutzer auch bei Dunkelheit oder schlechter Sicht (Brillenträger ohne Brille) und auch während des Gehens oder Laufens ohne auf das Gerät zu blicken und ohne stehenzubleiben, die richtige Richtung erkennen.

In einer weiteren vorteilhaften Ausführung ist der, der Schrittlänge proportionale Betrag eines im elektronisch-digitalen Rechenwerk erzeugten Schrittvektors variabel.

Dadurch kann die Schrittlänge an verschiedene Personen oder Situationen angepaßt werden.

In einer vorzugsweisen Ausführung wird die Anzeigevorrichtung und/oder das akustische oder durch Vibration fühlbare Leit-Signal durch eine Taste, einen Schalter oder durch einen auf Schalleinwirkung reagierenden elekronischen Schalter eingeschaltet.

Dadurch können die Anzeige und Leitsignale bei Bedarf durch Zuruf oder Pfiff oder dergleichen eingeschaltet werden, so daß die Hände zum Einschalten des Leitsignales oder der Anzeige nicht gebraucht werden, was besonders für sportliche Läufer oder Reiter und für Behinderte und für mehr Komfort von Bedeutung ist.

Sowohl durch eine Anschlußvorrichtung für den Anschluß eines vom Gerät extern befindlichen Bewegungszählimpulsgebers als auch durch eine vorteilhafte Ausführung mit einem Steck-oder Schraubanschluß zum Anschluß einer elektrischen oder faseroptischen Verbindungsleitung zwischen dem Orientierungsgerät und dem externen Bewegungszählimpulsgebers mit gleichzeitiger Unterbrechung des internen Schrittbewegungswandlers ist das Gerät ausbaubar bzw. ein externer Schrittbewegungswandler an eine optimale Stelle der Bewegung fixierbar.

Eine vorteilhafte Ausführung ist mit einem Empfänger für eine Infrarot- oder Ultraschall- oder Funkwellen-Übertragung von Zählimpulsen eines externen Bewegungs- zählimpulsgebers ausgestattet.

Eine weitere vorteilhafte Ausführung des erfindungsmäßigen Orientierungsgerätes ist mit einer integrierten elektronischen Uhr mit oder ohne Alarmeinrichtung, mit oder ohne Stoppuhreinrichtung ausgestattet.

Dadurch kann ein Wanderer oder Tourist bequemerweise an den wichtigen Zeitpunkt des Umkehrens erinnert werden.

Eine vorteilhafte Ausführung der Erfindung ist mit einer Einsteckvorrichtung für ein externes, einsteckbares elektronisches Speichermedium ausgerüstet, wobei die im elektronisch- digitalen Rechenwerk gespeicherten Vektordaten von Wegvektoren und Schrittlängen, ausgelöst durch eine Abspeicher-Befehlstaste in das externe Speichermedium abgespeichert weden oder die im externen Speichermedium gespeicherten Vektordaten von Weg- vektoren und Schrittlängen ausgelöst durch eine Einlese-Befehlstaste in das elektronisch-digitale Rechenwerk eingelesen werden.

Eine weitere vorteilhafte Ausführung ist mit einer Anschlußeinrichtung zum Anschluß einer Daten- verbindungsleitung zur Übertragung der Daten von Wegvektoren und Schrittlängen eines anderen Orientierungsgerätes oder eines Master-Datenspeichers ausgestattet.

Dadurch können Wanderrouten gespeichert, archiviert, kopiert und anderen Personen, auch mit unterschiedlichen Schrittlängen, zur Verfügung gestellt bzw. übermittelt werden.

Beschreibung anhand von Zeichnungen

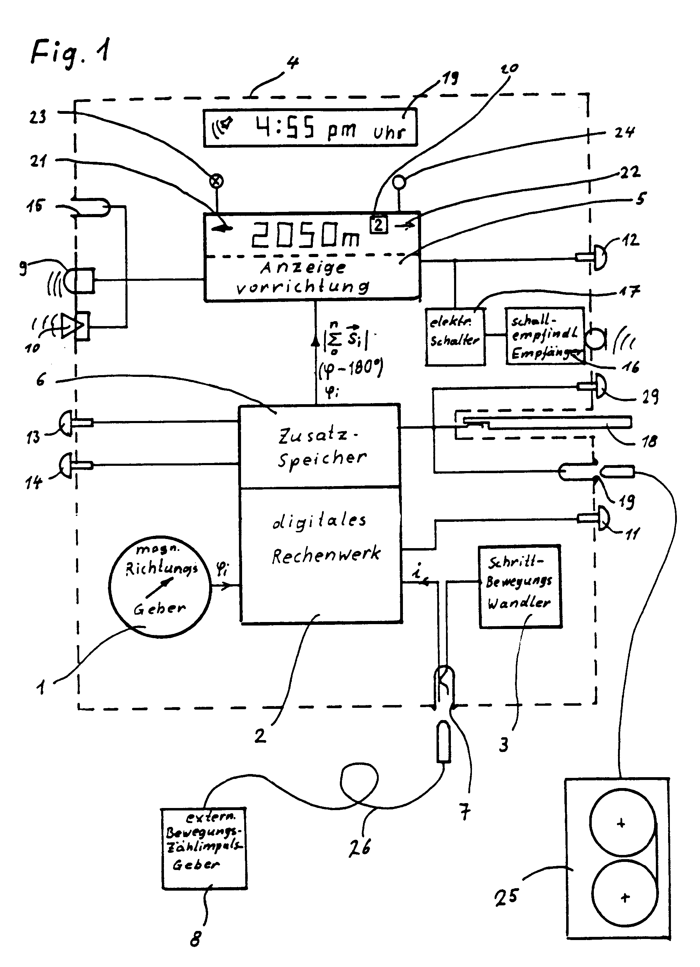

Fig.1 zeigt eine beispielsweise Ausführung des erfindungsmäßigen Orientierungsgerätes (4) in einer prinzipiellen Darstellung.

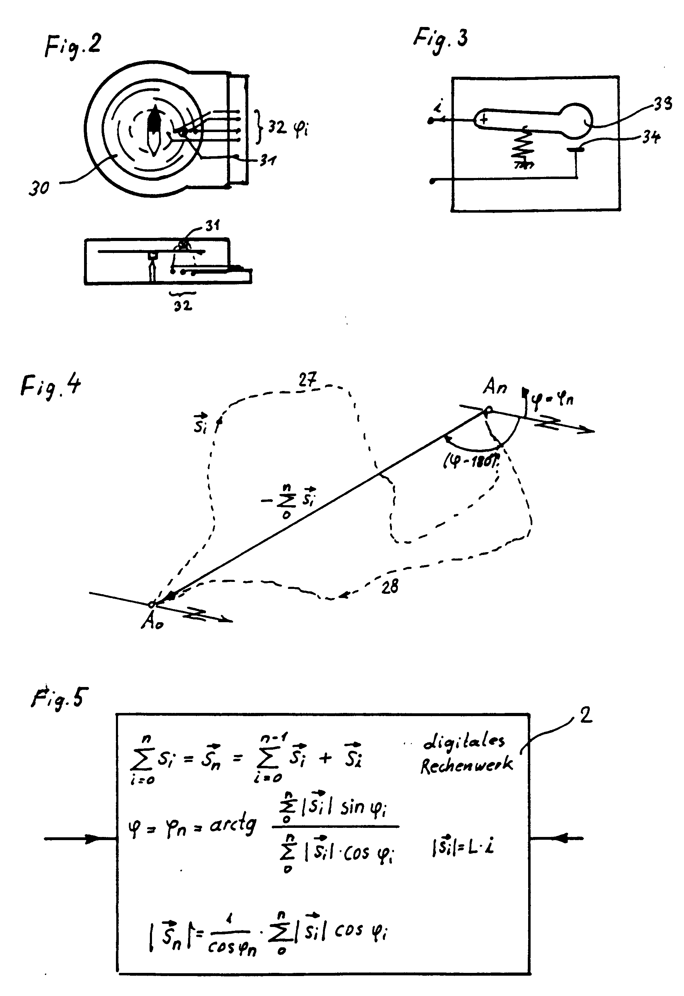

Fig.2 zeigt einen magnetischen Richtungsgeber (1), der ein der Fortbewegungsrichtung entsprechendes Richtungssignal $\varphi_i$ an das digitale Rechenwerk (2) abgibt. Ein möglicher magnetischer Richtungsgeber besteht z.B. aus einer spitzengelagerten drehbaren Kompaßscheibe (30) mit binär- oder im Graycode codierten transparent oder nicht transparenten Segmenten, die auch die Dauermagneten trägt. Auf der einen Seite der Kompaßscheibe befindet sich eine LED (31), auf der gegenüberliegenden Seite mehrere Fotodioden (32), die je nach Drehrichtungsposition der Kompaßscheibe (30) in bestimmter Reihenfolge beleuchtet werden. Damit steht die Richtung als digitales Richtungssignal $\varphi_i$ zur Verfügung und wird an das digitale Rechenwerk (2) geführt. Als magnet. Richtungsgeber (1) können magnetosensitive-Halbleiter und -Widerstände, Halleffekt-Elemente mit Analog-Digital-Converter und dgl. aber auch jedes andere System, z.B. ein Gyro-Kompass, verwendet werden.

Der Schrittbewegungswandler (3), siehe Fig.3, besteht beispielsweise aus Beschleunigungs-, Druck- Aufnehmer oder einem piezoelektrischen Element mit fest- oder federndverbundenem Massestück, oder in der einfachsten Weise aus einem frei federnd, um eine Achse drehbar aufgehängten Pendel (33), welches die schwingende Gehbewegung eines gehenden oder laufenden oder reitenden Benutzers mitmacht, und bei jedem Schritt einen Gegenkontakt (34) berührt, womit ein Stromkreis geschlossen bzw. ein Stromimpuls i an das digitale Rechenwerk (2) abgegeben wird, welcher mit dem momentanen Richtungssignal $\varphi_i$ des magnetischen Richtungsgebers (1) im digitalen Rechenwerk (2) einen einzelnen Schrittvektor $\vec{s}_i$ erzeugt. Der Betrag des Schrittvektors $|\vec{s}_i|$ entspricht dabei der Schrittlänge des Benutzers und kann dabei durch z.B. eine Taste (11) in aufeinander-folgenden Stufen, eingestellt werden. Der nächste Schritt des Benutzers i+1, der z.B. in eine andere Richtung $\varphi_{i+1}$ erfolgt, erzeugt im digitalen Rechenwerk (2) einen weiteren Schrittvektor

$$\vec{s}_{i+1}$$

und dieser wird zu dem im Rechenspeicher davor gespeicherten Vektor

$$\sum_{0}^{n-1} \vec{s}_i$$

vektoriell addiert, wodurch laufend ein resultierender Wegvektor

$$\sum_{0}^{n} \vec{s}_i = \sum_{0}^{n-1} \vec{s}_i + \vec{s}_{i+1}$$

aufsummiert wird.

Der Betrag

$$\left| \sum_{0}^{n} \vec{s}_i \right|$$

dieses momentan resultierenden Wegvektors stellt den momentanen Abstand zum Ausgangsort $A_o$ dar, und der Negativwert der Richtung des Wegvektors nämlich ($\varphi$-180°) zeigt die Richtung zum Ausgangsort $A_o$ zurück, siehe Fig.4.

Für die vektorielle Addition zweier Vektoren müssen beispielsweise im digitalen Rechenwerk (2) die in Fig.5 dargestellten mathematischen Beziehungen gebildet werden. Die programm - mäßige Behandlung der Vektorrechnung kann beispielsweise in rechtwinkeligen oder Polar - Koordinaten oder auch anders erfolgen, ist aber im übrigen nicht Gegenstand dieser Erfindung.

Abstand und Richtung zum Ausgangsort zurück können dem Benutzer mittels einer Anzeigevorrichtung (5) angezeigt werden. Dies kann z.B. optisch an einem LC - Display dargestellt werden. Da der Benutzer im allgemeinem die Winkelgrade garnicht wissen muß, sondern es ihm genügt zu wissen, ob er sich tür den Rückweg (28) in Fig.4, mehr nach links oder mehr nach rechts drehen und gehen soll, kann dies durch einen auf dem LC-Display erscheinenden linken Pfeil ← (21) oder rechten Pfeil → (22) oder durch eine links oder rechts aufleuchtende LED (23) oder (24) optisch und zusätzlich durch ein akustisches oder durch Vibration fühlbares Leit-Signal mittels eines Lautsprechers (10) oder Vibrators (9) dem Benutzer erkennbar gemacht werden. Beispielsweise kann die Richtigkeit der vom Benutzer eingenommenen Richtung zurück gegenüber der Soll - Richtung ($\varphi$-180°) durch die Tonhöhe oder Folgefrequenz eines akustischen "beep"-Signals erkennbar sein: Weicht die vom Benutzer momentan eingenommene Richtung $\varphi_i$ von der Soll - Richtung ($\varphi$-180°) zum Ausgangsort

stärker ab - erhöht sich die beep- Folgefrequenz, dreht er sich näher zur Soll- Richtung - wird die beep- Folgefrequenz langsamer. Hat er sich dann denau in die soll- Richtung ($\varphi$-180°) gedreht, in diesem Fall wäre das momentane Richtungssignal $\varphi_i$ des magnetischen Richtungsgebers gleich dem errechneten Negativwert ($\varphi$-180°) der Richtung des momentanen resultierenden Wegvektors $\varphi_i$ , dann könnte dies dem Benutzer dadurch erkennbar gemacht werden, daß beispielsweise beide Pfeile$\rightarrow \rightarrow$ (21 und 22) gleichzeitig erscheinen oder beide LED's links und rechts (23 und 24) aufleuchten und ein akustischer Dauerton hörbar wird. Die Modulation des Leit-Signals in Abhängigkeit von der Größe der Abweichung der momentanen Bewegungs-Richtung $\phi_i$ von der Soll- Richtung ($\varphi$-180°) zum Ausgangsort $A_o$, kann entweder im Prozessor der Anzeigevorrichtung (5) oder im Prozessor des digitalen Rechenwerks (2) erfolgen.

Der Wanderer (Benutzer) muß aber nicht die genaue Richtung ($\varphi$-180°) zum Ausgangsort Ao zurückgehen, er muß auch nicht die gleiche Wegroute zurückgehen, die er gekommen ist (27), vielmehr kann er jeden beliebigen Weg (28) zurückgehen und wird trotzdem immer zum Ausgangsort $A_o$ hin, zurückgeführt werden.

Fig.4 zeigt einen beispielsweisen Wanderweg (27).

Bevor der Benutzer vom Ausgangsort $A_o$ losgeht, schaltet er das Orientierungsgerät ein. Wenn er z.B. am Ort $A_n$ umkehren will, schaltet er die Anzeigevorrichtung (5) mittels z.B. der Taste (12) ein, womit auf dem LC-Display die Entfernung des Ausgangsortes $A_o$ in Meter, sowie die Richtung zum Ausgangsort ($\varphi$-180°) und mittels akustischem oder vibrativ fühlbarem Leit-Signal angezeigt wird.

Ist das Orientierungsgerät noch mit einem Zusatzspeicher (6) zur Speicherung von resultierenden Wegvektoren von aufeinanderfolgenden Ausgangsorten $A_{o1}, A_{o2},...,$ ausgestattet, dann kann die Genauigkeit und Verwendbarkeit wesentlich erhöht werden. Dies soll an einem folgenden Anwendungsbeispiel erläutert werden:

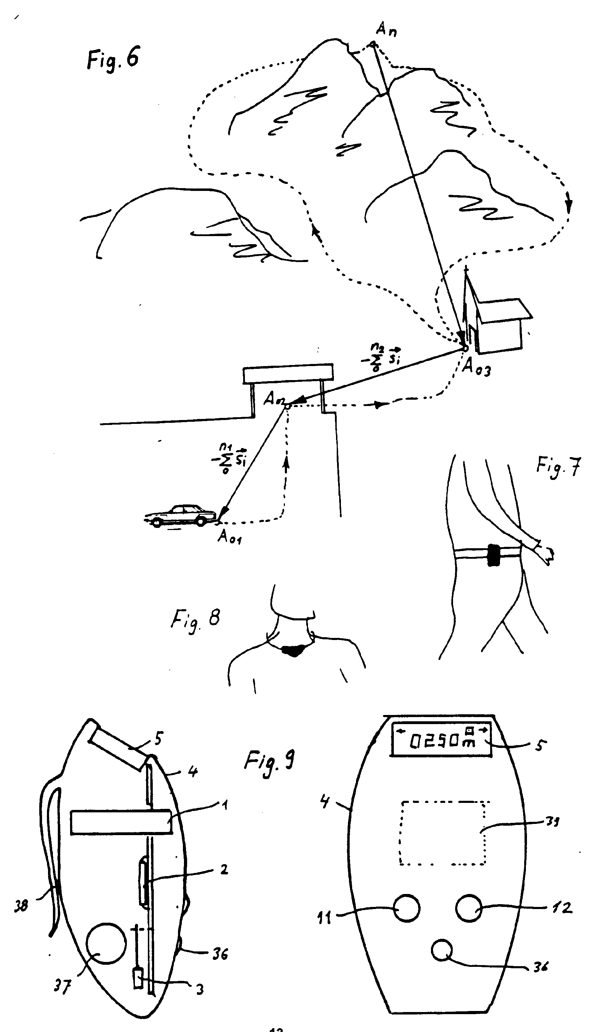

Wie in Fig.6 dargestellt, verläßt der Benutzer z.B. sein auf einem großen unübersichtlichen Parkplatz geparktes Auto, schaltet da sein Orientierungsgerät ein ($A_{o1}$) und geht dann zum Eingang des Parkplatzes. Hier drückt er die Speicher-Befehlstaste (13), wodurch der an dieser Stelle ($A_{o2}$) aufsummierte resultierende Wegvektor

$$\sum_{o}^{n1} \vec{s}_i$$

in den Zusatz-Speicher (6) abgespeichert wird und der Rechenspeicher des digitalen Rechenwerks (2) wieder auf Null gesetzt d.h. gelöscht wird. Damit wird der Eingang des Parkplatzes zum neuen Ausgangsort $A_{o2}$. Dann geht der Benutzer weiter z.B. zum nahegelegenen Kirchenplatz und drückt beim Kirchentor ein zweites Mal die Speicher-Befehlstaste (1), wodurch der an dieser Stelle aufsummierte resultierende Wegvektor

$$\sum_{o}^{n2} \vec{s}_i$$

auf einen nächsten Speicherplatz des Zusatzspeichers (6) abgespeichert wird und der Rechenspeicher des digitalen Rechenwerks (2) abermals auf Null gesetzt wird: Auch diese Stelle - Kirchtor am Kirchenplatz - wird dadurch zum zweiten neuen, bzw. dritten Ausgangsort $A_{o3}$. Nun macht der Benutzer z.B. eine mehrstündige Wanderung durch die Stadt oder Land. Wenn er einmal umkehren möchte, z.B. beim Ort $A_n$, und er zu diesem Zweck die Anzeigevorrichtung (5) durch Tastendruck auf Taste (12) einschaltet, dann wird ihm auf der LCD der Anzeigevorrichtung (5) die Entfernung=

$$\left| \sum_{o}^{n3} \vec{s}_i \right|$$

und die Richtung zurück zum letzten Ausgangsort $A_{o3}$ durch den Negativwert der Richtung ($\varphi_3$-180°) des letzten resultierenden Wegvektors

$$\sum_{o}^{n3} \vec{s}_i$$

also zurück zum Kirchenplatz angezeigt. Wenn er wegen Ungenauigkeiten diesen Platz nur ungefähr erreicht, geht er noch bis zum Kirchentor - dort, wo er zuletzt die Speicher-Befehlstaste (13) drückte und betätigt hier die Rückruf- Befehlstaste (14), wodurch der vorangegangene im Zusatzspeicher (6) gespeicherte resultierende Wegvektor

$$\sum_{\sigma} \vec{S_i}$$

wieder in den Rechenspeicher des digitalen Rechenwerks (2) eingelesen wird, so daß nunmehr der Benutzer zum Eingang des Parkplatzes $A_{o2}$ zurückgeführt wird. Schließlich angekommen beim Eingang des Parkplatzes, drückt er dort nochmals die Rückruf-Befehlstaste (14), wodurch der erste, auf einem ersten Speicherplatz des Zusatzspeichers (6) gespeicherte resultierende Wegvektor

$$\sum_{\sigma}^{n-1} \vec{S_i}$$

in den Rechenspeicher des digitalen Rechenwerks (2) eingelesen wird, und der Benutzer vom erfindungsmäßigen Orientierungsgerät zum ursprünglichen Ausgangsort $A_{o1}$ - zu seinem geparkten Auto geführt wird.

Trotzdem der Benutzer viele Stunden oder viele Kilometer weit gegangen ist und sich dabei gewisse Abweichungen in Richtung und Abstand ergeben haben könnten, werden an den zwischengespeicherten Ausgangsorten sowohl beim Hinweg durch Null-setzen des Rechenspeichers des digitalen Rechenwerks (2), als auch beim Rückweg durch Rückruf des gespeicherten Wegvektors und Einlesen in das digitale Rechenwerk, Fehler dabei jedesmal gelöscht. Trotz langer Wanderung kann somit der Benutzer sein geparktes Auto auf ein paar Meter genau finden. Die Genauigkeit wird dadurch derart erhöht, daß auch Blinde mit dem erfindungsmäßigen Orientierungsgerätes ganze Wegrouten durch Stadt und Land alleine unternehmen können.

Ein weiterer wesentlicher Vorteil liegt auch darin, daß Teilstrecken einer Wanderroute durch Fahrten mit Verkehrsmittel oder Taxi usw. unterbrochen werden können. Die Orte der Fahrt- oder Wander-Unterbrechungen brauchen nur durch einen Tastendruck gespeichert werden. Das Orientierungsgerät erlaubt eine Wanderung oder einen Ausflug ganz individuell und frei zu gestalten - es muß nicht alles zu Fuß gelaufen werden. Für Blinde eröffnet dies bisher unbekannte Mlöglichkeiten der Bewegungsfreiheit in Stadt und Land.

Eine weitere erfindungsmäßige Ausgestaltung des Orientierungsgerätes erweitert die Möglichkeiten noch um ein weiteres:

Ein von außen anschließbares oder einsteckbares externes Speichermedium (18) zur Speicherung von Wegvektoren und Schrittlänge, ähnlich dem internen fixen Zusatzspeicher (6) im Orientierungsgerät, ermöglicht es, durch eine weitere Abspeicher- und Einlese- Befehlstaste (29) mit welcher ein Abspeicher- oder Einlese- Vorgang zwischen dem externen Speichermedium (18) und dem internen Zusatzspeicher (6) ausgelöst wird, Wanderrouten beliebig oft zu wiederholen, anderen Benutzern zur Verfügung zu stellen oder zu kaufen. Als externe Speichermedien (18) kommen beispielsweise EE-PROM-cards (electrical erasable programmable read only memory) in Verwendung, aber auch andere elektrische oder magnetische Speichersysteme.

Da in dem externen Speichermedium (18) neben den Wegvektor-Daten auch eine dazu maßstäbliche Schrittlänge gespeichert ist, können die Wegvektor-Daten im digitalen Rechenwerk (2) einfach im Verhältnis der Schrittlängen vergrößert oder verkleinert werden, sodaß in externen Speichermedien (18) gespeicherte Wanderrouten unabhängig von der Schrittlänge des jeweiligen Benutzers übertragbar und austauschbar sind.

Hat beispielsweise eine Person ein Auto irgendwo geparkt und eine andere Person will das Auto holen, dann braucht die parkende-Person der Auto-suchenden-Person lediglich die Speicher-card zu übergeben. Es ist lediglich darauf zu achten, daß das Orientierungsgerät an der gleichen Stelle, z.B. wie in Fig. 7 dargestellt, seitlich am Bund oder Gürtel getragen wird. Dies kann aber leicht dadurch überprüft werden, daß bei gleicher Ausrichtung auch das gleiche Leit-Signal ertönen soll.

In einer anderen Ausführung des Orientierungsgerätes ist dieses ähnlich einem Collier um den Hals getragen,siehe Fig.8. Durch die Anlage an der Brust des Benutzers ist eine gut reproduzierbare Kopplung des Richtungsgebers mit der Fortbewegungsrichtung des Benutzers gegeben.

Als externes Speichermedium (18) kommt auch ein Magnetband-Recorder in Anwendung. Das Orientierungsgerät ist dafür mit Anschlußstecker oder - Buchse (19) für den Anschluß eines Magnetband-Recorders (25) z.B. eines sogenannten "Walkman" zur Speicherung und Übertragung der Vektor-Daten und der Schrittlänge ausgestattet oder kann auch mit einem solchen Band-Recorder zusammengebaut sein. Auf dem Magnetband z.B. einer Standard-Kassette, können neben den Vektor-Daten einer Wanderroute oder Sightseeing-Tour, an den Ausgangsorten, auch die Erklärung der Sehenwürdigkeiten aufgesprochen sein. Mit dem Ohrhörer eines erfindungsmäßigen Orientierungsgeräts mit Magnetband-Recorder, ist sowohl die historische Information als auch das Leit-Signal zur nächsten Sehenswürdigkeit zu hören. Dazu kommt der Vorteil dieses elektronischen "Reiseleiters", daß der Tourist jeden beliebigen Weg von einer Sehenswürdigkeit zur nächsten gehen kann. Zwischen vorgegebene Ausgangsorte können auch Fahrstrecken eingelegt werden und damit eine auf Band-Kassette oder Speichercard vorprogrammierte Sightseeing-Tour trotzdem völlig frei gestaltet werden und dies ohne jegliche Stadtpläne oder Landkarten zu benötigen.

EP 0 304 419 B1

Neben einem Anschluß (15) für einen externen Ohrhörer für eine gute Hörbarkeit des Leit-Signals in lärmender Umgebung bzw. um durch das richtungsgebende Leit-Signal nicht andere auf sich aufmerksam zu machen, findet man auch einen Anschluß (7 ) für einen externen Bewegungs-Zählimpulsgeber (8 ), wobei dann der interne Schrittbewegungswandler (3) ausgeschaltet ist. Ein Anschluß für einen externen Bewegungs-Zählimpulsgeber bietet den Vorteil die Fortbewegung an einer optimalen Stelle zu messen bzw. in elektrische Zählimpulse umzuwandeln.Z.B. können die Schrittzählimpulse von einem im Laufschuh in bekannter Weise eingebauten Druckwandler gewonnen werden. Oder es kann ein Bewegungszählimpulsgeber an einem Fahrrad angeschlossen werden. Die Übertragung der Zählimpulse eines externen Bewegungszählimpulsgebers (8) kann über eine elektrische oder faseroptische Leitung (26) erfolgen oder mittels Infrarot-Ultraschall- oder Funkwellen- Übertragung erfolgen.

Schließlich erlaubt eine im Orientierungsgerät integrierte elektronische Uhr mit z.B. digitaler Anzeige (19) sowie mit Alarm- und Zeitmäß- Einrichtung eine Wanderroute auch zeitmäßig zu planen bzw. eine zeitgerechte Umkehr zum Ausgangsort durch ein Alarmzeichen in Erinnerung zu rufen.

In einer weiteren Ausgestaltung des Orientierungsgerätes kann die Anzeigevorrichtung (5) durch einen elektronischen Schalter (17) im Zusammenwirken mit einem schallempfindlichen Empfänger (16) einschaltbar sein. Anzeigs- und Leitsignale können damit vom Benutzer bei Bedarf durch einen Zuruf oder Pfiff eingeschaltet werden, die Hände werden dabei nicht gebraucht, was für den sportlichen Läufer oder Reiter, für Behinderte und für mehr Komfort von Bedeutung ist.

Um den Benutzer bei der Speicherung von Wegvektoren an die entsprechenden Ausgangsorte zu erinnern, können die Speicherplätze im Zusatzspeicher z.B.durch Nummern an der LCD (20) der Anzeigevorrichtung (5) gekennzeichnet sein und auf einem beschreibbaren Feld des Orientierungsgerätes, notiert werden.

Fig.9 zeigt beispielsweise eine Ausführungsform des erfindungsmäßigen Orientierungsgerätes in natürlicher Größe in der Seitenansicht: Die Spange (38), die Batterie (37), das Kontaktpendel des Schrittbewegungswandlers (3), den magnetischen Richtungsgeber (1), eine Platine mit dem digitalen Rechenwerk (2) als Mikroprozessor, die Anzeigevorrichtung (5) mit LCD, Gehäuse (4) sowie in Frontansicht die wichtigsten Tasten wie Enschalter (36), Schrittlängen - Eingabetaste (11) und die Einschalttaste (12) für die Anzeigevorrichtung (5) und Leit-Signal, sowie ein Schreibfeld (39).

## Patentansprüche

1. Elektronisch-automatisches tragbares Orientierungsgerät für Wanderer, Blinde, Läufer und Reiter mit einem magnetischen Erdfeld-Richtungsgeber, der ein der Fortbewegunsrichtung entsprechendes elektrisches Richtungssignal abgibt, einem Wegmesser zur Abgabe eines elektrischen Wegsignals, einem elektronisch-digitalen Rechenwerk (2), an welches die Ausgänge von Richtungsgeber und Wegmesser angeschlossen sind, wobei aus dem Richtungssignal und dem Wegsignal ein Wegvektor gebildet wird, wobei zur Wegmessung ein elektromechanischer Schrittbewegungswandler (3) zum Erzeugen von elektrischen Schrittzählimpulsen vorhanden ist und in einem elektronisch- digitalen Rechenwerk (2), ausgelöst von einem elektrischen Schrittzählimpuls, ein jeweils der Schrittlänge proportionaler Schrittvektor erzeugt und diese Schrittvektoren laufend zu einem resultierenden Wegvektor aufsummiert werden, wobei der jeweilige durch eine Anzeigevorrichtung (5) angezeigte Betrag des resultierenden Wegvektors den momentanen Abstand zum Ausgangsort angibt und der durch eine Anzeigevorrichtung (5) angezeigte, momentane Negativwert ($\varphi$- 180°) der Richtung des resultierenden Wegvektors, dem Benutzer die momentane Richtung zum Ausgangsort angibt und einem elektronischen Zusatzspeicher (6) zur Speicherung von einem oder mehreren im elektronisch-digitalen Rechenwerk (2) errechneten resultierenden Wegvektoren und einer oder mehreren Speicher-Befehlstasten (13) zur Auslösung des Einspeichervorganges eines oder mehrerer momentan aufsummierter resultierender Wegvektoren in den Zusatzspeicher (6), wonach das elektronischdigitale Rechenwerk (2) auf den Ausgangswert Null zurückgesetzt wird, von da ab der Betrag und der Negativwert ($\varphi$- 180°) der Richtung eines nunmehr neuen fortlaufend aufsummierten resutierenden Wegvektors zurück zum neuen Ausgangsort durch die Anzeigevorrichtung (5) angezeigt werden, und eine oder mehrere Rückruf- Befehlstasten (14) zur Auslösung eines Speicherrückruf-Vorganges, mit welchen bei der Rückwanderung beim Erreichen eines Ausgangsortes, der an diesem Ort abgespeicherte resultierende Wegvektor aus dem Zusatzspeicher (6) wieder in das elektronisch- digitale Rechenwerk (2) eingelesen wird, und durch die Anzeigevorrichtung (5), von da ab der Betrag und der Negativwert ($\varphi$-180°) der Richtung des resultierenden Wegvektors zurück zum vorangegangenen Ausgangsort, angezeigt werden.

2. Orientierungsgerät nach Anspruch 1, wobei bei Drehung des Benutzers in die Richtung des Negativwertes ($\varphi$ -180°) des resultierenden Wegvektors, das ist in die Richtung zum Ausgangsort, dies dem Benutzer durch Modulation eines akustischen oder durch Vibration fühlbaren Leit-Signales in Abhängigkeit von der

7

Größe der Abweichung seiner momentanen Bewegungsrichtung von der Soll- Richtung ($\varphi$- 180°), angezeigt wird.

3. Orientierungsgerät nach Anspruch 2, wobei der, der Schrittlänge proportionale Betrag eines im elektronisch -digitalen Rechenwerk (2) erzeugten Schrittvektors, variabel ist.

4. Orientierungsgerät nach Anspruch 3, wobei die Anzeigevorrichtung (5) und/oder das akustische oder durch Vibration fühlbare Leit-Signal durch eine Taste (12), einen Schalter oder durch einen auf Schalleinwirkung reagierenden elekronischen Schalter (16,17) eingeschaltet wird.

5. Orientierungsgerät nach Anspruch 4, mit einer Anschlußvorrichtung (7) für den Anschluß eines vom Gerät extern befindlichen Bewegungszählimpulsgebers (8).

6. Orientierungsgerät nach Anspruch 5, mit einem Steck-oder Schraubanschluß zum Anschluß einer elektrischen oder faseroptischen Verbindungsleitung (26) zwischen dem Orientierungsgerät und dem externen Bewegungszählimpulsgebers (8) mit gleichzeitiger Unterbrechung des internen Schrittbewegungswandlers (3).

7. Orientierungsgerät nach Anspruch 6, mit einem Empfänger für eine Infrarot- oder Ultraschall- oder Funkwellen- Übertragung von Zählimpulsen eines externen Bewegungszählimpulsgebers (8).

8. Orientierungsgerät nach Anspruch 6, mit einer im Orientierungsgerät integrierten elektronischen Uhr (19) mit oder ohne Alarmeinrichtung, mit oder ohne Stospuhreinrichtung.

9. Orientierungsgerät nach Anspruch 6, mit einer Einsteckvorrichtung (35) für ein externes, einsteckbares elektronisches Speichermedium (18), wobei die im elektronischdigitalen Rechenwerk (2) gespeicherten Vektordaten von Wegvektoren und Schrittlängen, ausgelöst durch eine Abspeicher-Befehlstaste (29) in das externe Speichermedium (18) abgespeichert werden oder die im externen Speichermedium (18) gespeicherten Vektordaten von Wegvektoren und Schrittlängen ausgelöst durch eine Einlese-Befehlstaste (29) in das elektronisch-digitale Rechenwerk (2) eingelesen werden.

10. Orientierungsgerät nach Anspruch 7, mit einer Anschlußeinrichtung (19) zum Anschluß einer Datenverbindungsleitung (40) zur Übertragung der Daten von Wegvektoren und Schrittlängen eines anderen Orientierungsgerätes oder eines Master-Datenspeichers (25).

## Claims

1. Electronic, automatic, portable orientation device for hikers, the blinds, joggers, and riders comprising a magnetic earth-field direction sensor for generating an electrical direction signal according to the direction of the man's progress, a stride-motion sensor for producing motion signals and an electronic digital arithmetic unit (2) to which the electric outlets of the direction sensor and the stride-motion sensor are connected, wherein a distance vector is calculated from the direction signal and the stride-motion signal, wherein for the stride-motion sensing an electro-mechanical stride-motion converter (3) is provided for producing electrical stride-counting pulses and in an electronic digital arithmetic unit triggered by a stride-counting pulse a stride-vector proportional to the respective stride length is produced and the stride-vectors are continually summarized to a resulting distance-vector, wherein the respective value of the resulting distance-vector shown by an indicator means (5) indicates the momentary distance to the starting point and wherein the momentary opposite direction ($\varphi$-180°) of the resulting distance-vector given by an indicator means (5) indicates the momentary direction toward the starting point, and an electronic additional memory (6) for storage of one or more distance-vectors calculated in the electronic digital arithmetic unit and one or more memory-keys (13) for triggering a storage process of one or more momentary resulting distance-vectors in the additional memory (6), whereafter the elctronic digital arithmetic unit (2) is reset to zero, so from now on the value and the opposite value ($\varphi$-180°) of the direction of a new started summarized resulting distance-vector back to this new starting point is shown by the display (5), and one or more memory recall-keys (14) to effect a memory recall process, with which when at a starting point, the resulting distance-vector stored previously at that place, will be re-transferred from the additional memory (6) to the electronic digital arithmetic unit (2) and thus by the indicator (5) the value and the opposite value ($\varphi$-180°) of the direction of the resulting distance-vector back to the previous starting point are indicated.

2. Orientation device according to claim 1, wherein by turning of the user in the direction of opposite value ($\varphi$-180°) of said resulting distance-vector - i.e. in the direction of the starting point - the user is provided with a modulation of an acoustic or perceptible vibration guiding signal depending on the value of the divergence of the momentary moving direction from the predetermined value ($\varphi$-180°).

3. Orientation device according to claim 2, wherein the value of each stride-vector generated in the electronic digital arithmetic unit (2) and being proportional to the stride length is variable.

4. Orientation device according to claim 3, wherein the indicator means and/or the acoustic or perceptible vibration guiding signal is switched on by a switch (12), a key or an electronic switch (16, 17) reacting on sound impact.

5. Orientation device according to claim 4, with a connecting device (7) for connecting an external motion-pulse-generator (8).

6. Orientation device according to claim 5, with a socket or screw-connector for connecting an electric- or fiber optical connecting line (26) between the orientation device and the external motion-pulse-generator (8) with simultaneous interruption of the internal step converter (3).

7. Orientation device according to claim 6, with a receiver for infrared, supersonic or radio wave transmission of the generated pulses of the external motion-pulse-generator (8).

8. Orientation device according to claim 6, with an electronic watch with or without alarm and with or without timer integrated in the orientation device.

9. Orientation device according to claim 6, with a socket device (35) for connecting an external portable electronic memory medium (18) whereby vector data of the distance-vectors and the stride lengths stored in the electronic digital arithmetic unit (2) are transferable into the external memory medium (18) initiated by a memory-key (29) or whereby the vector data of the distance-vectors and the stride lengths stored in the external memory medium (18) can be retransferred to the electronic digital arithmetic unit (2) initiated by a read-key (29).

10. Orientation device according to claim 7, with means (19) for connecting a data-line (40) for transferring data of the distance-vectors of another orientation device or to a master memory medium (25).

## Revendications

1. Dispositif électronique portatif d'orientation automatique pour promeneurs, aveugles, coureurs et cavaliers avec un indicateur de direction du champ magnétique terrestre pour délivrer un signal électrique de direction correspondant à la direction de déplacement, un odomètre pour délivrer un signal électrique de parcours, un calculateur (2) electronique digital auquel sont reliées les sorties de l'indicateur de direction et de l'odomètre de manière à élaborer un vecteur-parcours à l'aide du signal de direction et du signal de parcours, un convertisseur électromécanique (3) pas-déplacement de mesure de parcours pour générer des impulsions électriques de nombre de pas et créer un vecteur-pas correspondant proportionnel à la longueur de pas à partir d'une impulsion électrique de nombre de pas dans le calculateur (2) électronique digital, ces vecteurs-pas étant additionnés en permanence en un vecteur-parcours résultant, afin de préciser la longueur correspondante du vecteur-parcours résultant de la distance instantannée au lieu de départ qui est affiché à l'aide d'un indicateur (5) et la valeur opposée (φ - 180°) instantannée de la direction du vecteur-parcours résultant de la direction instantannée de l'utilisateur au lieu de départ qui est affiché à l'aide d'un indicateur (5), et une mémoire auxiliaire (6) électronique pour stocker au moins un vecteur-parcours calculé dans le calculateur (2) électronique digital, et au moins une touche d'instruction de memoire (13) pour déclencher le processus d'acquisition de la mémoire d'au moins un vecteur-parcours résultant additionné instantanné dans la mémoire auxiliaire (6) à la suite de quoi le calculateur (2) électronique digital est remis sur la valeur de sortie nulle et de là sont affichées à l'aide de l'indicateur (5) la longueur et la valeur opposée (φ -180°) de la direction d'un nouveau vecteur-parcours résultant additionné en permanence au nouveau lieu de départ, et au moins une touche d'instruction de rappel (14) pour déclencher un processus de restitution de la mémoire avec lequel lors de l'excursion inverse par atteinte d'un lieu de départ, le vecteur-parcours résultant stocké de ce lieu est extrait de la mémoire auxiliaire (6) et réintroduit dans le calculateur (2) électronique digital et de là sont affichées à l'aide de l'indicateur (5) la longueur et la valeur opposée (φ -180°) de la direction du vecteur-parcours au lieu de départ préconcerné.

2. Dispositif selon la revendication 1 où lors de sa rotation dans la direction de la valeur opposée (φ-180°) du vecteur-parcours résultant, c'est à dire dans la direction du lieu de départ, l'utilisateur est informé par la modulation ou la vibration d'un signal directeur audible ou sensible en fonction de l'importance de l'écart entre sa direction de déplacement instantannée et la valeur de consigne (φ-180°).

3. Dispositif selon la revendication 2 où la longueur du vecteur-pas proportionnel à la longueur de pas créé dans le calculateur (2) électronique digital est variable.

4. Dispositif selon la revendication 3 où l'indicateur (5) et/ou le signal directeur audible ou vibratoire est mis en oeuvre à l'aide d'une touche (12), d'un commutateur ou à l'aide d'un commutateur (16,17) électronique acoustosensible.

5. Dispositif selon la revendication 4 equipé d'un commutateur (7) pour le raccordement d'un emetteur (8) d'impulsions numeriques de déplacement extérieur au dispositif.

6. Dispositif selon la revendication equipé d'un convecteur à fiche ou à vis pour le raccordement d'un câble de liaison (26) électrique ou à fiche optique associant l'emetteur (8) exterieur au dispositif et simultanément interruptant le convertisseur (3) interne.

7. Dispositif selon la revendication 6 equipé d'un recepteur pour un transmetteur infra-rouge, ultrasonore ou radio d'impulsions numériques d'un emetteur (8) extérieur.

8. Dispositif selon la revendication 6 equipé d'une montre (19) électronique incorporés avec ou sans alarme, avec ou sans système d'interruption.

9. Dispositif selon la revendication 6 equipé d'un mécanisme à enfichage (35) pour une mémoire (18) électronique enfichable extérieur où les données vectorielles des vecteurs-parcours et des longueurs de pas stockées dans le calculateur (2) électronique digital et récupérées à l'aide d'une touche d'instruction (29) d'appel peuvent être transférées dans la mémoire extérieure (18) ou bien les données vectorielles des vecteurs-parcours et des longueurs de pas stockées dans la mémoire extérieure (18) et récupérées à l'aide d'une touche d'instruction (29) d'appel peuvent être transférées dans le calculateur (2) électronique digital.

10. Dispositif selon la revendication 7 equipé d'un convecteur (19) pour le raccordement d'un réseau de données (40) pour le transfert des données de vecteurs-parcours et de longueurs de pas d'un autre dispositif d'orientation ou d'une mémoire principale de données (25).

**Fig. 1**

Fig.2

$\left.\begin{array}{c}\\\end{array}\right\} 32\ \varphi_i$

31

30

31

32

Fig.3

33

34

Fig.4

27

$\vec{S_i}$

$An$

$\varphi = \varphi_n$

$(\varphi - 180°)$

$-\sum\limits_0^n \vec{S_i}$

$A_0$

28

Fig.5

2

digitales
Rechenwerk

$$\sum_{i=0}^{n} S_i = \vec{S_n} = \sum_{i=0}^{n-1} \vec{S_i} + \vec{S_i}$$

$$\varphi = \varphi_n = arctg\ \frac{\sum\limits_{0}^{n} |\vec{S_i}|\ sin\ \varphi_i}{\sum\limits_{0}^{n} |\vec{S_i}|\cdot cos\ \varphi_i}$$

$$|\vec{S_i}| = L\cdot i$$

$$|\vec{S_n}| = \frac{1}{cos\ \varphi_n}\cdot \sum\limits_{0}^{n} |\vec{S_i}|\ cos\ \varphi_i$$

Fig. 6

Fig. 7

Fig. 8

Fig. 9